# EUROPEAN PATENT APPLICATION

(11) **EP 3 970 571 A1**
(43) Date of publication of application: **23.03.2022**
(21) Application number: 20880491.4
(22) Date of filing: 26.03.2020
(51) Int. Cl.: A47G 19/22

(54) **DISPOSABLE CUP FOR HOT AND CHILLED BEVERAGES**

(30) Priority: 31.10.2019 RU 2019134956
(71) Applicant: Forpet S.A.R.L., 1511 Luxembourg (LU)
(72) Inventor: RASTORGUEV, Dmitrii Sergeevich, Moscow, 123154 (RU); NIKITENKO, Sergei Sergeevich, Moskovskaya oblast, 141406 (RU); TSIRKULEV, Mikhail Valerevich, Moscow, 109544 (RU)
(74) Representative: Spengler, Robert
(86) International application number: PCT/RU2020/000179
(87) International publication number: WO 2021/086226

(57) **Abstract**

The utility model relates to drinking vessels, more specifically to a disposable container for hot and cold beverages. The problem which the inventor of a disposable cup made of a multi-layered material based on foamed polyethylene terephthalate sought to solve was that of overcoming the defects of the known prior art. The technical result lies in the creation of a disposable cup made of a multi-layered material based on foamed primary polyethylene terephthalate and/or secondary polyethylene terephthalate (obtained from polyethylene terephthalate waste), which is easy to produce and fit for use. This technical result is achieved by the entire combination of essential features. The essence of the utility model consists in that a disposable cup for hot and chilled beverages consists of a lateral wall, in the form of a rotation body, and a base, which are fastened to each other, wherein a flanged edge is formed in the upper part of the lateral wall, the lateral wall and the base are multi-layered and comprise a layer of foamed polyethylene terephthalate with a density of from 100 kg/m3 to 900 kg/m3 and a characteristic viscosity of from 0.5 dl/g to 1.0 dl/g, which is connected to a polyethylene layer by fusion.

## Description

### TECHNICAL FIELD OF THE INVENTION

The invention relates to drinking vessels, more particularly to disposable tableware for hot and chilled beverages.

### BACKGROUND OF THE INVENTION

The prior art discloses solutions, according to which a disposable cup is manufactured by fastening a lateral wall and a base to each other. In this case, the lateral wall of the cup is predominantly in the form of a truncated cone having an upper diameter larger than a lower diameter and made of cardboard laminated with polyethylene or polyethylene copolymer at least from the inner side of the lateral wall. Furthermore, the edges forming the lateral wall of the cup are fastened together with a longitudinal seam. The base of the cup is made of cardboard that is laminated with polyethylene or polyethylene copolymer on at least one side, provided at the bottom of the lateral wall inside the cup with the laminated side up, and fastened to the bottom of the lateral wall of the cup. The prior art also discloses solutions, according to which a cup for hot and chilled beverages comprises a body consisting of a conical wall, a base and a neck having an annular shoulder, wherein the lateral conical wall has reinforcement ribs, and the cup is made of thermoplastic polymer material, for example, polystyrene, polypropylene, by means of thermoforming.

RU 133398 discloses a disposable cup for vending machines. The cup comprises a lateral wall expanding upwards and having a flanged edge along its upper edge and reinforcing members, as well as a base. The cup is characterized in that it is two-layered, the flanged edge is rounded, the lateral wall has an inclination angle of 7-10 degrees relative to a vertical axis, and its upper section is not more than 10 mm in width, arranged under the upper edge, and has a greater inclination angle compared to the rest of the wall. Furthermore, the reinforcing members are made as annular ledges, and there are protrusions provided on the inner surface of the wall at a height of 4-6 mm from its lower edge.

RU 2016133134 discloses a disposable cup for hot and chilled beverages. The cup consists of a lateral wall and a base fastened together. The lateral wall of the cup is predominantly in the form of a truncated cone having an upper diameter larger than a lower diameter and is made of cardboard laminated at least from the inner side of the lateral wall. A non-woven material is provided on the outer surface of the cardboard. Furthermore, the edges forming the lateral wall of the cup are fastened together with a longitudinal seam, and the base of the cup is made of cardboard laminated on at least one side, is arranged at the bottom of the lateral wall inside the cup with the laminated side up and attached to the bottom of the lateral wall of the cup.

The disadvantages of these types of disposable cups are as follows: the limited reuse of cups made of polymeric materials due to a significant deterioration in the properties of polymers (polystyrene and/or polypropylene) during recycling; the complex recycling of cardboard-based disposable cups due to mandatory polyethylene layers comprised therein - said recycling usually involves incineration; the long-term natural decomposition of recycled disposable cups due to mandatory polyethylene or polyethylene copolymer layers comprised therein; the use of cardboard results in destroying the world's global forest resources.

### SUMMARY OF THE INVENTION

The objective set by the author of a disposable cup made of a multi-layered material based on expanded polyethylene terephthalate is to eliminate the disadvantages of the prior art analogues. The technical result consists in creating a disposable cup that is easy to manufacture and fits for use from a multilayer material based on expanded primary and/or recycled (obtained from polyethylene terephthalate waste) polyethylene terephthalate. This technical result is achieved by the whole set of essential features.

The essence of the invention is that a disposable cup for hot and chilled beverages consists of a lateral wall made as a rotation body and a base which are fastened to each other. A flanged edge is formed in an upper part of the lateral wall, the lateral wall and the base are multi-layered and comprise a layer of expanded polyethylene terephthalate having a density ranging from 100 kg/m³ to 900 kg/m³ and a characteristic viscosity ranging from 0.5 dl/g to 1.0 dl/g. The layer of expanded polyethylene terephthalate is connected to a layer of polyethylene by fusion. At the same time, the lateral wall is made as a truncated cone or a cylinder. Additionally, the lateral wall comprises a printed layer. Moreover, the layer of expanded polyethylene terephthalate has a thickness ranging from 200 µm to 1000 µm. At the same time, the layer of polyethylene or polyethylene copolymer or polyethylene terephthalate copolymers has a thickness ranging from 10 µm to 40 µm. Additionally, recycled expanded polyethylene terephthalate may be used as the layer of expanded polyethylene terephthalate.

### BRIEF DESCRIPTION OF THE DRAWING

The invention is explained by the drawings, in which:

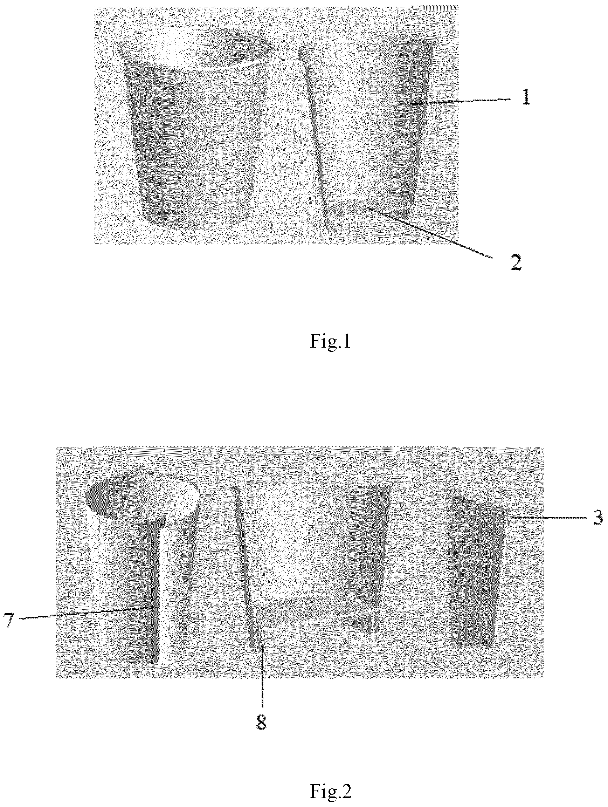

FIG. 1 schematically shows the assembly process of a disposable cup based on expanded polyethylene terephthalate;
FIG. 2 shows a structure of expanded polyethylene terephthalate;

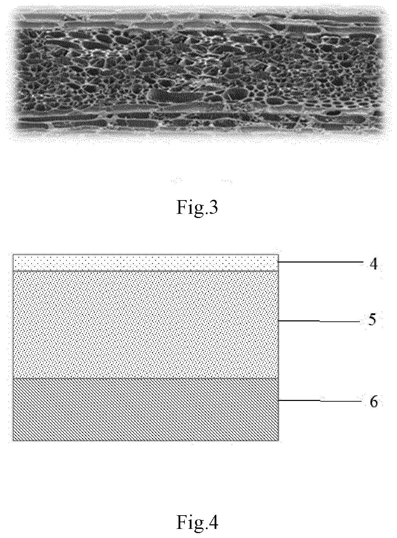

FIG. 3 schematically shows a cup wall made of a multilayer composition based on expanded polyethylene terephthalate.

### DETAILED DESCRIPTION OF THE INVENTION

A disposable glass for hot and chilled beverages consists of a lateral wall 1 and a base 2 fastened together. A flanged edge 3 is made in an upper part of the lateral wall 1. The lateral wall 1 is made as a rotation body, for example, a truncated cone or a cylinder. The lateral wall 1 and the base 2 are multi-layered and comprise: a printed layer 4, a layer 5 of expanded polyethylene terephthalate, a main layer 6 of polyethylene or polyethylene copolymer or polyethylene terephthalate copolymer. The printed layer 4 is an information-carrying layer applied on the outside of the lateral wall 1. The printed layer 4 is configured to accommodate various kinds of consumer-intended information and images. The printed layer 4 is made by using rotogravure printing or offset printing, or flexographic printing, or any combination thereof, and applied on the layer 5 of expanded polyethylene terephthalate. The layer 5 of expanded polyethylene terephthalate serves as a main supporting carrier layer and acts as a replacement for a carrier layer of cardboard and/or paper. The layer 5 of expanded polyethylene terephthalate retains a sufficient strength to withstand repeated bending-unbending cycles. The layer 5 of expanded polyethylene terephthalate has a density ranging from 100 kg/m³ to 900 kg/m³ and an intrinsic viscosity (IV) ranging from 0.5 dl/g (deciliters/gram) to 1.0 dl/g. The layer 5 of expanded polyethylene terephthalate has a thickness ranging from 200 µm to 1000 µm. The main layer 6 of polyethylene or polyethylene copolymer, or polyethylene terephthalate copolymer serves as a welding layer and is connected to the layer 5 of expanded polyethylene terephthalate due to a melt temperature and surface tensions of the layers. The main layer 6 of polyethylene or polyethylene copolymer, or polyethylene terephthalate copolymer is used for joining the edges of the lateral wall to each other by means of a seam 7 and for attaching to the walls of the base 2 using a seam 8. The main layer 6 of polyethylene or polyethylene copolymer, or polyethylene terephthalate copolymers has a thickness ranging from 10 µm to 40 µm. Expanded recycled polyethylene terephthalate may be used as the main carrier layer 5. Expanded recycled polyethylene terephthalate is obtained from polyethylene terephthalate (PET) waste by performing several recycling steps, namely: - washing, purifying the PET waste; - crushing, separating the crushed PET waste according to polymer types and colors; - extruding a polyethylene terephthalate melt; - performing PET liquid-state polycondensation. The PET liquid-state polycondensation is based on the inherent ability of PET to condense in a molten state under vacuum. The condensation leads to an increase in the intrinsic viscosity. High-efficiency vacuum effectively removes harmful chemical impurities from the material, making it possible for the recycled material to be used for 100% safe contact with food products. As the molten PET enters a vertical portion of P:REACT (an LSP reactor), filaments are produced, which form a corresponding surface in volumetric relation. The material is then collected in a horizontal drum and slowly moved forward. The condensation process begins immediately after the production of the filaments and continues until the PET leaves the LSP reactor. An increase in the intrinsic viscosity is controlled by the residence time and degree of vacuum of the molten PET in the LSP reactor, and therefore may be set to a desired level. Parameter settings allow a control unit to maintain a predetermined intrinsic viscosity level within a narrow tolerance range. The process of removing impurities is very effective as it is performed in the liquid state of PET. Not only the purification efficiency of the material that exceeds the limits set by food industry standards is provided, but also lubricants are effectively removed from the fibers during the purification process. An increase in the intrinsic viscosity may be measured at a level of about 0.01 dl/g per minute. The continuous operation of the LSP reactor provides a narrow intrinsic viscosity range of a granulate, which is suitable for high-end applications, such as fiber spinning or the production of sheets by extrusion. Fluctuations in the intrinsic viscosity during the mass production are simply ruled out. The separation of harmful impurities, such as lubricants or substances not intended for contact with food products, is performed under high-effective vacuum. The high removal rate of the impurities allows the LSP reactor to be utilized in a variety of applications, providing its high operational flexibility. The favorable conditions created in the LSP reactor (temperature/a melt surface-volume ratio/high-efficiency vacuum) allows the PET condensation process to be freely initiated. This leads to an increase in the intrinsic viscosity by about 0.01 dl/g per minute. Faster response times translate into faster achievement of required results and higher profitability. The rounded flanged edge 3 is made along the upper edge of the lateral wall 1, i.e., the upper edge of the lateral wall 1 is bent outward and rounded to form an annular shoulder, which increases the thickness of the edge of the lateral wall 1, stiffens the upper part of the cup, and allows the cup to be pulled out from a stack of cups freely and without crushing. Additionally, cups having a rounded flanged edge are more comfortable to use for drinking.

The method of manufacturing the disposable cup for hot and chilled beverages is as follows. Blanks to be used as the lateral wall 1 are obtained from rolls and/or sheets of a multilayer material comprising at least the printed layer 4, the layer 5 of expanded polyethylene terephthalate, and the main layer 6 of polyethylene or polyethylene copolymer or polyethylene terephthalate copolymer by means of rotary or flat die cutting. Further, narrow strips which are used to form the base 2 are cut from the rolls and/or sheets of the multilayer material comprising at least the printed layer 4, the layer 5 of expanded polyethylene terephthalate 5, and the main layer 6 of polyethylene or polyethylene copolymer, or polyethylene terephthalate copolymer. At the next step, the cup is assembled from the lateral walls 1 by means of their bending, thereby giving the product the shape of a rotation body, for example, a truncated cone or a cylinder. Next, the base 2 is attached. Moreover, the edges of the lateral wall 1 are attached to each other with the aid of the layer 6 due to a melt/welding temperature, and the base 2 is also attached to the edges, forming the seams 7 and 8. Then, the products are subjected to rolling.

### Industrial applicability

The claimed invention allows one to manufacture a disposable cup consisting of the main carrier layer of recycled expanded polyethylene terephthalate and fully recycle a wasted packaging product based on the multi-layered material comprising the main carrier layer of expanded polyethylene terephthalate by means of crushing and subsequent liquid-state polycondensation of polyethylene terephthalate, thereby restoring the properties of polyethylene terephthalate to those of primary raw materials. The claimed invention allows one to recycle the multi-layered materials comprising the main carrier layer of expanded polyethylene terephthalate as many times as one sees fit. In most cases, the claimed invention allows one to manufacture a disposable cup from the multi-layered material comprising the layer of expanded polyethylene terephthalate having physical and mechanical characteristics better than those of similar disposable cups based on cardboard and/or paper. The claimed invention is 5%-30% cheaper in cost than cardboard or paper, depending on cardboard or paper brands and depending on a required expansion coefficient, and depending on the intrinsic viscosity of polyethylene terephthalate. Thus, the claimed invention improves the performance characteristics of the product.

## Claims

1. A disposable cup for hot and chilled beverages, comprising a lateral wall made as a rotation body and a base which are fastened to each other, wherein a flanged edge is formed in an upper part of the lateral wall, the lateral wall and the base are multi-layered and comprise a layer of expanded polyethylene terephthalate having a density ranging from 100 kg/m³ to 900 kg/m³ and a characteristic viscosity ranging from 0.5 dl/g to 1.0 dl/g, the layer of expanded polyethylene terephthalate being connected to a layer of polyethylene by fusion.

2. The disposable cup of claim 1, wherein the lateral wall is made as a truncated cone or a cylinder.

3. The disposable cup of claim 1, wherein the lateral wall comprises a printed layer.

4. The disposable cup of claim 1, wherein the layer of expanded polyethylene terephthalate has a thickness ranging from 200 µm to 1000 µm.

5. The disposable cup of claim 1, wherein the layer of polyethylene or polyethylene copolymer or polyethylene terephthalate copolymers has a thickness ranging from 10 µm to 40 µm.

6. The disposable cup of claim 1, wherein recycled expanded polyethylene terephthalate is used as the layer of expanded polyethylene terephthalate.
